# EUROPEAN PATENT APPLICATION

(11) **EP 2 290 558 A1**
(43) Date of publication of application: **02.03.2011**
(21) Application number: 10174172.6
(22) Date of filing: 26.08.2010
(51) Int. Cl.: G06F 17/30, G06Q 30/00

(54) **System, method and apparatus for search code information retrieval**

(30) Priority: 01.09.2009 US 551951; 13.04.2010 US 759421
(71) Applicant: The TMS Way Limited, Hong Kong (CN)
(72) Inventor: Saurat, Frederick Henry, Hong Kong (CN)
(74) Representative: Andrews, Martyn Peter

(57) **Abstract**

An information retrieval system using a search code is provided. Embodiments of the present invention may include a processor component configured to perform the operations of a system application, the system application configured to generate one or more data records, the system application further configured to generate multiple search codes and store the multiple search codes and the one or more data records in memory and associate each of the one or more data records with one or more of the multiple search codes, each of the one or more data records including instructions for the execution of a predetermined action. The predetermined action may be, for example, delivering content, sales, a marketing activity, a discount offering, an advertisement campaign, a transaction, an application to use, or any other type of offer that is generally directly at users of offline or online media.

## Description

### BACKGROUND OF THE INVENTION

The present invention relates generally to an information retrieval system, and more particularly to a system, method, and apparatus for information retrieval using a search code.

Due to the widespread use of computers and computer technology, it has become common practice for online companies to measure the activity of its users. For example, search companies can monitor the words that are being entered into a search engine and then send targeted ads that relate to those words. Additionally, shopping websites can also track the purchases of customers in order to determine their preferences and shopping habits. This type of information tracking can be useful for marketing and business development.

Currently, for offline media, such as television and print, including magazines, newspapers, billboards, or any other media that is not connected to the Internet, it is not easy to track the user's actions. For example, after a person sees a billboard ad, there is no way to know if the ad was effective or if the person took any action after seeing the ad. It is also not possible to interact in real time with this person after they viewed the ad. Accordingly, there is a large amount of media activity that cannot be monitored or used for future business development or other business activities.

A number of searching methods and user interaction methods are currently known. However, there is a need for a system, method and apparatus for information retrieval using a search code that addresses these and other shortcomings of known systems.

### SUMMARY OF THE INVENTION

According to one embodiment, an information retrieval system using a search code is disclosed. The information retrieval system includes a processor component configured to perform the operations of a system application, the system application configured to generate one or more data records, the system application further configured to generate multiple search codes and store the multiple search codes and the one or more data records in memory and associate each of the one or more data records with one or more of the multiple search codes, each of the one or more data records including instructions for the execution of a predetermined action.

According to another embodiment, the information retrieval system may further include a device in operable communication with the system application, the device is configured to transmit a search code query including a predetermined one of the multiple search codes to the system application, and wherein the system application is further configured to receive the search code query and query the database using the predetermined one of the multiple search codes to locate a data record associated with the predetermined one of the multiple search codes, the system application further configured to execute the instructions for the execution of the predetermined action. The system application may be further configured to generate and update user profiles and store the user profiles on the database, wherein a corresponding user profile is updated in response to the search code query. In one embodiment, the user device is in operable communication with the system application over the Internet, and the search code query is transmitted to the system application using a web browser.

According to another embodiment of the present invention, an information retrieval method is disclosed. The information retrieval method includes generating one or more data records, storing multiple search codes and the one or more data records in memory; and associating each of the one or more data records with one or more of the multiple search codes, each of the one or more data records including instructions for the execution of a predetermined action.

According to another embodiment of the present invention, a computer-readable memory medium having computer-executable instructions for controlling a computer processor to retrieve information is disclosed. The computer-readable memory medium including instructions for generating one or more data records; storing multiple search codes and the one or more data records in memory; and instructions for associating each of the one or more data records with one or more of the multiple search codes, each of the one or more data records including instructions for the execution of a predetermined action.

Still other embodiments of the present invention will become readily apparent to those skilled in the art from the following detailed description, wherein embodiments of the invention are described by way of illustration. As will be realized, the invention is capable of other and different embodiments and its several details are capable of modifications in various respects, all without departing from the spirit and the scope of the present invention.

### BRIEF DESCRIPTION OF THE DRAWINGS

FIG. 1 is a block diagram of an example search code information retrieval system, in accordance with an embodiment of the present invention.

FIG. 2 is a block diagram of a simplified search code transmission process, in accordance with an embodiment of the present invention.

FIG. 3A is a block diagram of an example search code, in accordance with an embodiment of the present invention.

FIG. 3B is a block diagram of a data structure representing a campaign, in accordance with an embodiment of the present invention.

FIG. 4 is a flow diagram showing an example search code campaign creation process, in accordance with an embodiment of the present invention.

FIG. 5 is a flow diagram showing an example search code information retrieval process, in accordance with an embodiment of the present invention.

FIG. 6 is a flow diagram of an example purchase transaction, in accordance with an embodiment of the present invention.

FIG. 7 is a block diagram of example computer architecture for use with embodiments of the present invention, in accordance with an embodiment of the present invention.

### DETAILED DESCRIPTION

In the following description, reference is made to the accompanying drawings where, by way of illustration, specific embodiments of the invention are shown. It is to be understood that other embodiments may be used as structural and other changes may be made without departing from the scope of the present invention. Also, the various embodiments and aspects from each of the various embodiments may be used in any suitable combinations. Accordingly, the drawings and detailed description are to be regarded as illustrative in nature and not as restrictive.

Generally, embodiments of the present invention are directed to a system, method, and apparatus for providing measurability and real time user interaction to offline media formats. In one implementation, embodiments of the present invention may be used to adopt the pay per click model, and other internet-based advertising models, to offline forms of media and advertising. Embodiments of the present invention may also provide additional functionality and performance to online media. According to one embodiment of the present invention, a search code is generated and associated with a campaign. The campaign may be, for example, content, sales, a discount offering, an advertisement campaign, or any other type of promotion, marketing activity or action that is generally directly at generating public interest and response. The search code is used in conjunction with an offline or online activity. For example, the search code may appear on an advertising billboard. A user viewing the search code may access a system application and input a search code query, using the search code, into the system application. In response to the search code query, the system application searches a database, or other data structure, for the campaign associated with the particular search code that has been entered. The campaign may include instructions on what action to take in response to the search code query. For example, the user may be directed to a particular website, the user may be sent discount offers, the system application may send information or files, such as videos or music to the user, or the system application may launch a particular application on the user device. Accordingly, a wide range of system responses are possible. Information on the user's location may also be obtained with the search code query, which allows embodiments of the present invention to provide targeted information based on the user's location. The system application may also generate user profiles and store information about the user's activities and preferences each time a search code query is entered by a particular user.

One example search code according to embodiments of the present invention may be used in the future under the name "TMS code", which is currently under development by The TMS Way.

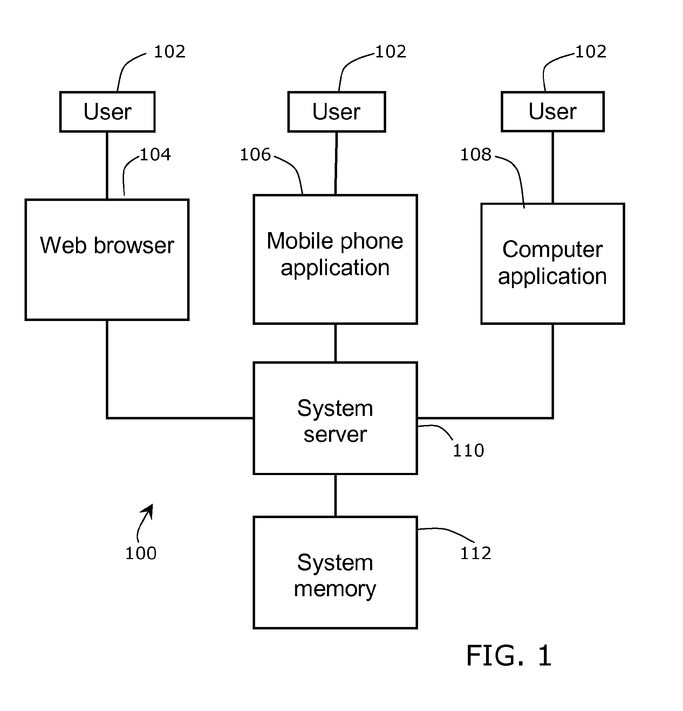

Referring now to the figures, FIG. 1 is a block diagram of an example search code search information retrieval system ("the system") 100, in accordance with an embodiment of the present invention, is shown. The system 100 includes one or more users 102 with access to the system using one of any number of suitable user devices. For example, the user 102 may access the system using a web browser 104, a mobile phone application 106, a computer application 108, or any other type of suitable application on a suitable device. The web browser 104 may be any suitable application configured to access the internet and may be operating on a mobile telephone, personal computer, personal digital assistant, or other electronic or mobile device. Each of the user devices is in operable communication with a system server 110. A system application operates on the system server 110. The system server 110 is configured to execute the instructions needed to operate the system application and embodiments of the present invention. The system server 110 may include or be in operable communication with system memory 112, which may be any suitable storage device, such as a hard drive, database, data warehousing system, or similar storage device. Operable communication may be any suitable communication method, such as over wired or wireless networks, or electrical connections, including direct and indirect coupling.

According to one embodiment, the system application may operate on a single computer, such as the system server 110. According to another embodiment, such as for larger implementations of the system where search code queries are received from multiple users, the system may run on multiple computers. Information stored on the multiple computers may also be mirrors in order to provide functionality on a large scale. The system server 110, and each user device or other component operating in conjunction with the system, may include an information processor. The information processor is configured to execute the instructions to carry out the steps and operations of the system.

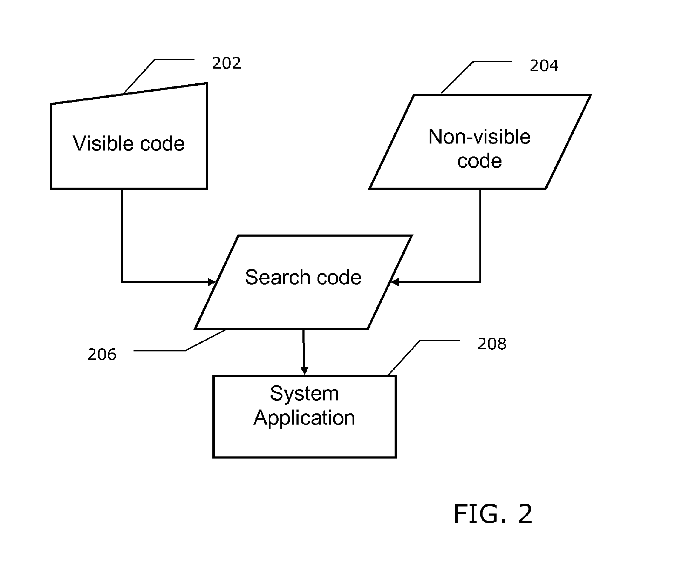

FIG. 2 is a block diagram of a simplified search code transmission process, in accordance with an embodiment of the present invention. A search code may include two parts, a visible part and a non-visible part. The visible part of the search code may be alpha numeric, for example, combining letters representing the name of the company offering the campaign together with a numeric portion. The visible part of the search code is viewed by the user and sent to the system application using a web browser or other device application. The non-visible part of the search code may include information that is sent by the user when the visible part of the search code is transmitted. For example, the transmission of a search query using a web browser will also include the IP address of the user. The IP address can be used to obtain information about the user including user's location and the user's network. Other information may also be transmitted, such as a GPS coordinate, which may be available, for example, on mobile devices with GPS capability. In mobile phone implementations, the transmission may include header information in the packets of data sending the visible part of the search code. The non-visible part of the search code may also include any of this header data that can provide information about the user of the mobile phone. The visible part of the code and the non-visible part of the code together comprise the search code. The system application 208 then uses the search code 206 to query a database of information.

In one application of the system using a mobile phone, the system can determine the user's more specific location and selectively send information in response to the search code depending on the user's location. The system can determine the user's location based on (i) knowing the location of where the particular search code is displayed, or (ii) by receiving GPS positioning coordinates with the transmission of the search code. Therefore, after receiving the search code, the system can deliver an offer or information for a product or store that is close to the user's location.

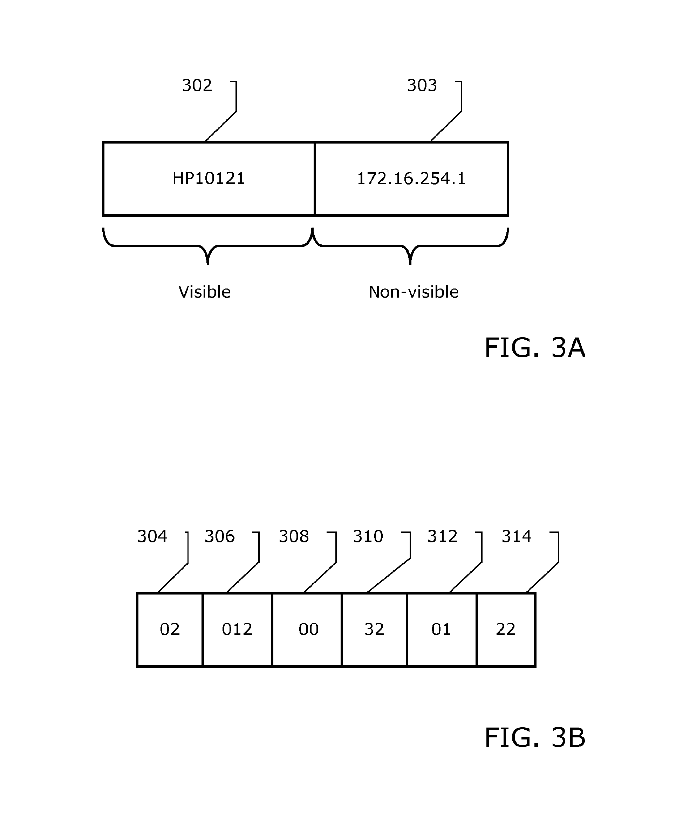

FIG. 3A is a block diagram of an example search code, in accordance with an embodiment of the present invention. The search code includes a visible part 302 and a non-visible part 303. The visible part 302 of the search code may include an alphanumeric sequence such as, in this case, HP10121. As described with reference to FIG. 2, the visible part 302 of the search code is sent together with the non-visible part 303 of the search code. The block diagram shown in FIG. 3A is one example illustration of a search code. The search code may include letters or words that relate to the name of the campaigning company, such as an abbreviation for the company name. The number portion may be automatically or randomly generated or also individually selected.

FIG. 3B is a block diagram of a data structure representing a campaign, in accordance with an embodiment of the present invention. The visible part of the search code may be associated with one or more data structures. Each of the data structures may include predetermined information regarding the scope of the campaign, including qualification information of the campaign and instruction information on what action to take in response to the search code query. For example, the qualification may include authorization information on what actions are permitted in response to a search code query. The data structures may be stored on the system memory.

In the illustrated example, each filed of the data structure includes one or more fields having numeric or alpha numeric values representing details of the campaign. Example fields are shown and illustrated in FIG. 3B. Field 304 represents a region, country or geography, section 306 represents a city or postal code, field 308 represents a campaign type, field 310 represents a product/service category, field 312 represents an authorization code, and field 314 represents demographic information. The region code field 304 indicates a particular geographic region that is may be determined by the non-visible part of the search code, such as the IP address indicating where the user was located. The authorization code field 308 may indicate whether any predetermined actions have been authorized, and if so, which actions are permitted. For example, a company sponsoring an ad may not want to allow targeted ads by competitor companies. Therefore, the code in the authorization code field may indicate this preference.

A plurality of the data structures may be stored in the system memory, such as in the database as a plurality of data records. The first part of the search code may be used to query the database and retrieve data records of one or more campaigns corresponding to the first part of the search code. If multiple data records a retrieved by the first part of the search code, information from the second part of the search code may be used to select one or more of the retrieved data records. For example, the location data from the second part of the code may be used to identify data records of campaigns directed at certain locations. The finally retrieved data record may then include instructions and authorizations for action to be taken by the system application.

According to one embodiment, the first part of the search code is a data representation of a user notification, where the notification is an online or offline notice to the user. For example, the user notification may be the television or print ad visible by the user. The user notification may also be an electronically displayed ad visible at a website. According to another embodiment, the search code, including the first part and the second part, may be a data representation of a user notification and the user's physical location. According to another embodiment, the search code may be a data representation of the user's device that is used to send the search query, including an indication of the physical location of the user's device.

Embodiments of the present invention may also operate using existing codes as the search code. For example, product coding, such as the universal product code (UPC), European article numbering (EAN), Japan article numbering (JAN), or International article numbering (IAN), or any other similar product code, may be used as a search code. Therefore, information associated with a particular product, or information targeted specifically at those interested in the particular product, can be associated with a product code. Also, the product code can be used to offer discounts or promotions with a product within certain defined time limits. For example, during a predetermined time period, the system may associate the product code with a discount. However, if the predetermined time period has run, then the association of the discount can be discontinued on the system. Product coding is only one example of other codes that may be used with embodiments of the present invention. Other coding systems may be used.

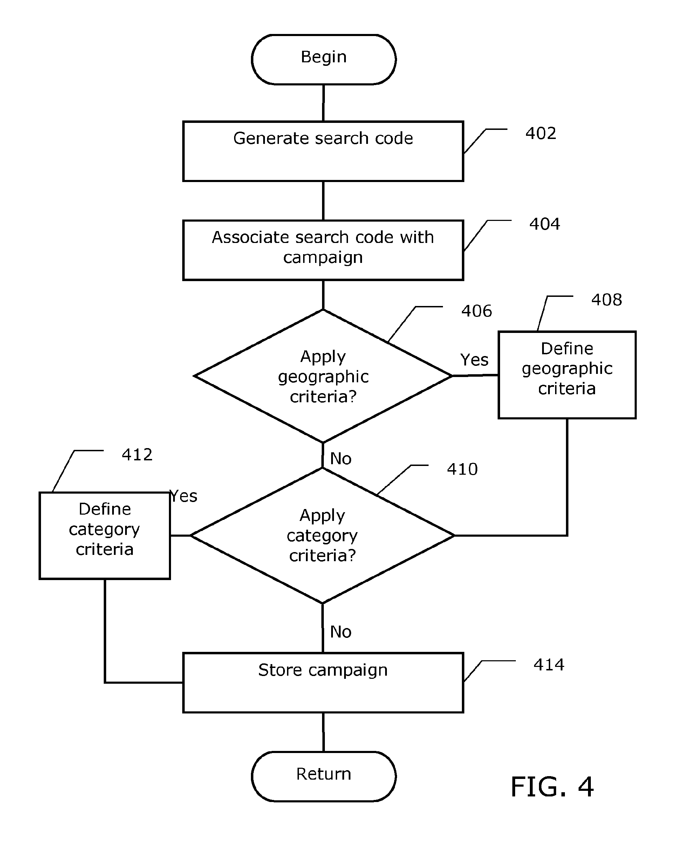

FIG. 4 is a flow diagram showing an example campaign creation process, in accordance with an embodiment of the present invention. In step 402, the system generates a search code. Generally, the visible, alphanumeric part of the search code is generated in step 402. In step 404, the system associates the search code with a particular campaign. The campaign may include general information regarding the owner of the campaign and specific instructions for processing search queries that include the search code or codes associated with the campaign. In step 406, a decision is made on whether to apply geographic criteria to the search code. For example, in one embodiment, the same visible part of the search code maybe used in multiple geographic regions, or in multiple regions internationally. Because the search code received by the system application includes the visible portion together with the region code in the non-visible portion, the system application can determine which geographic region the search query originated from. Therefore, the owner of the campaign is able to associate a first set of actions with a first geographic region and associate a second set of actions with a second geographic region, if desired. In step 408, the geographic criteria are defined. If geographic criteria are not to be used and the same action is taken regardless of geographic location of the user, then the system proceeds to step 410. In step 410, a determination is made regarding whether to apply category criteria. In step 412, the category criteria is defined. If category criteria is not used, then the system proceeds to step 414. In step 414, the campaign and the associated search code is stored in the database on system memory.

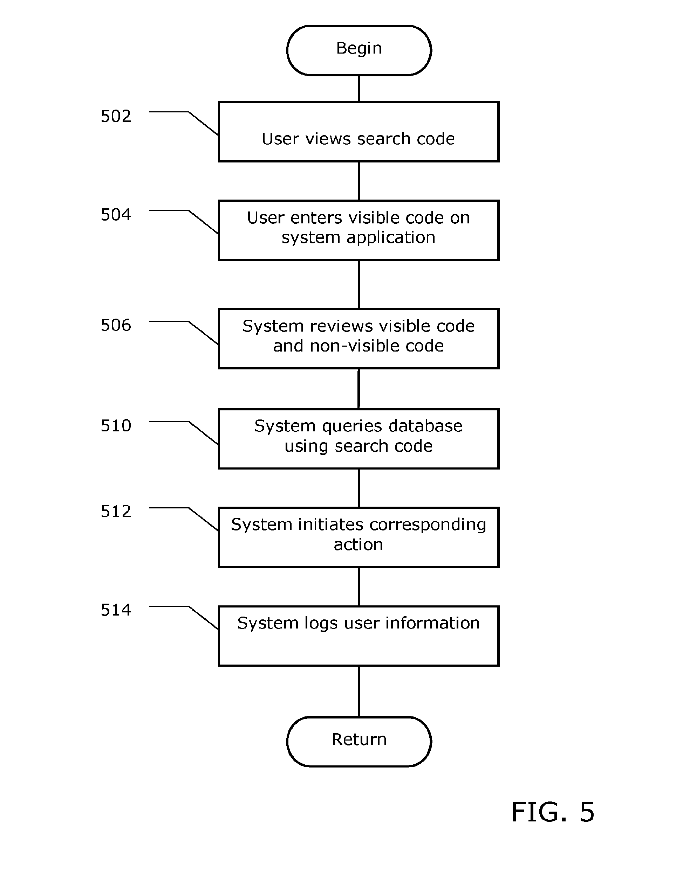

FIG. 5 is a flow diagram showing an example a search code information retrieval process, in accordance with an embodiment of the present invention. In step 502, the user views the visible part of search code displayed in connection with either offline or online media. In step 504, the user opens a web browser or other user interface and transmits the visible part of the search code to the system application. In step 506, the system application reviews both of the visible part of the code and the non-visible part of the search code. In some applications, the system may need to convert parts of the data received in the search into a format that can be used to query the system database. In step 510, the system queries the database using the search code. In step 512, the system initiates an action that corresponds to the search code. In step 514, the system may store the transaction information on the database in system memory. For example, if a user profile exists for the particular user, the transaction information is added to the user's profile. Otherwise, the system can generate a new user profile for the user.

Any suitable action may be initiated in response to the search query. For example, in addition to delivering content or directing the user to a webpage, the system may initiate the delivery of a promotion, such as an invitation, reward, coupon, or other vouchers that can be printed out or downloaded and shown to a particular vendor. One example of a possible offer may relate to a search code located on an advertising billboard for a car company. When the user inputs the search code, the search system may deliver a test drive invitation along with localized information on the nearest car dealerships where the invitation may be redeemed.

Any suitable applications may be launched in response to the search query. For example, according to one embodiment, the search code can be used to launch an application on a mobile phone to provide interactive control with other electrical devices. One example of a possible interactive control application may relate to television viewing in a hotel. A user can be watching television in a hotel and search code is presented in the hotel room. By accessing a webpage with a mobile phone, for example, and entering the search code, an application may be accessed or downloaded that allows the mobile phone to function as a remote control for watching the television. The application can be time or location specific such that, if the user checks out of the hotel or returns home, the application ceases to operate.

According to one embodiment of the invention, the user profile is a data representation of the user, including, for example, their interests, habits, location, and other desired information. The user profile may also include a unique user identification number, the name of the Telco or service provider, and time, date, and/or location information on each user transaction.

According to one implementation, embodiments of the present invention may be used with user-generated content. For example, a first user can generate a search code and associate it with a blog or a website. Other users may then use the system to receive the first user's blog or website content using the search code.

In another example, the system may be used with classified ads. For example, a first user may want to sell a car or other product. The first user may take a video or photo of the car or other product and associate a search code with the video or photo. Then, the user may use the search code with advertisements or messages notifying others of the sale of the car. Viewers of the advertisement or messages may enter the search code at the system application and receive the video or photo of the car or other product. In this example, therefore, the search code is a data representation of the car, or the video or photo of the car or other object. The system may also send targeted information to the users who enter the search code generated by the first user. For example, knowing that the search code is related to the sale of a car, targeted ads that relate to auto insurance or auto repair or other auto-related products and services may be sent to users who enter the search code.

Embodiments of the present invention may be used for online media as well as offline media. Example uses of embodiments of the present invention with online media are online gaming and online shopping. In online gaming, for example, if a user wants to purchase more credit for the game, the online game may display a search code. The user than may enter the search code in the system application, and the system application will launch a payment platform where the payment can be made. Then, without substantial interruption to the game, the user's credit is purchased and the game is notified accordingly. Similarly, in online shopping, a user may enter a search code to launch a payment platform to permit payment to the online shopping website or for an offline product purchase.

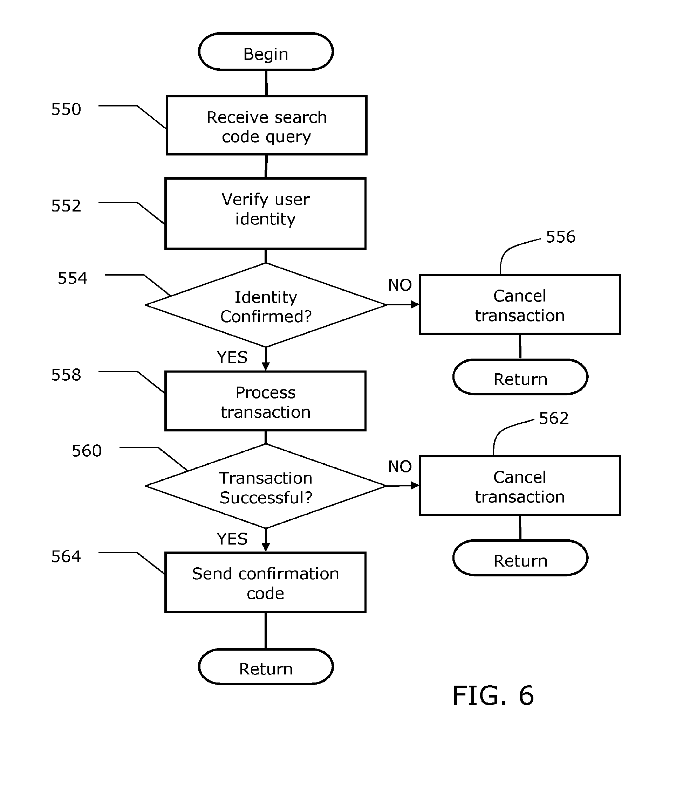

Therefore, as illustrated in the above example, one example action initiated by the system in response to a search code query is a transaction, according to one embodiment of the present invention. FIG. 6 is a flow diagram of an example transaction, in accordance with an embodiment of the present invention. In step 550, the system receives a search code query. In step 552, the system verifies the identity of the user submitting the search code query. Any user verification process may be used. For example, the user may be asked to input his phone number or user ID and a PIN or password. In another example, data on the user may be transmitted to the system as the non-visible part of the search code. For example, if the search code query is submitted using a mobile phone, a unique ID may be automatically transmitted to the system when the search code query is submitted. However, these are only example of possible verification methods and any other suitable methods may be used.

If the user's identity cannot be sufficiently verified by the system, then the transaction is cancelled, step 556. If the user's identity can be sufficiently verified, then the system processes the transaction, step 558. The transaction may be processed using any suitable method. In one embodiment, the transaction is a purchase transaction or a payment or transfer of funds, currency, credits, or other units of value. The transaction may be performed automatically after the user's identity is confirmed. The search code may have already been associated with a specific amount or value and a specific vendor, so that the system will have verified the user's identity, know the vendor to make the transfer to, and know how much value should be transferred from the user to the vendor. According to another embodiment, the transaction may be processed by launching a suitable payment platform, such as a credit card payment platform or other electronic transfer platform.

In step 560, the system confirms whether the transaction is successful. If the transaction is not successful, then the transaction is cancelled, step 562. If the transaction is successful, the system will send a confirmation code, step 564. According to one embodiment, a confirmation code is sent to the user and the confirmation code is send to the vendor. Therefore, the vendor can confirm that the user is entitled to the good or service purchased. This dual confirmation sending can be useful in off-line transactions where the user may be sent the confirmation to his mobile phone. The user can then show the confirmation code to the vendor at the point-of-sale terminal, and the vendor can confirm that the confirmation code matched the confirmation code that was also sent directly to the vendor. If the user's confirmation code doesn't match the vendor's confirmation code, then the vendor knows that the transaction was possibly not successful.

According to embodiments of the present invention, a search code may be associated with a particular good, service, value, virtual product, transaction or other identifiable item of value. A transaction may include a number of multiple products or services. For example, in an off-line transaction, a user may take multiple products to a point-of-sale terminal. The products may be processed by the vendor at the point-of-sale terminal to determine a purchase price of the multiple products. The vendor may transmit the purchase price to the system and obtain a search code that is associated with the purchase price of the multiple products and the vendor. The purchase transaction may then be completed according to the process illustrated and described with reference to FIG. 6. An on-line transaction may similarly be performed such that, when an on-line user puts multiple items in an on-line shopping cart and begins a "check-out" process on the website, a search code is associated with the value of the multiple items in the on-line shopping cart.

According to one embodiment, a vendor may run an application or an applet that is in operable communication with the system. Therefore, using this application or applet, the vendor may transmit information about an item or transaction, such as the cost amount, and the system may generate and associate a search code in real time and transmit the search code to the vendor for further use. Search codes having a predetermined value may also be associated with a particular vendor in advance so that no real time processing is necessary. The vendor may also transmit amount information to the system and verify its identity, similar to the user verification described with reference to FIG. 6, and receive an associated search code in response. The search code can then be used in a search query by a user as described with reference to FIG. 6.

According to one embodiment of the invention, a system currency unit may be provided. These "system units" of currency may be used in transaction between users of the system. Each user of the system may have an associated account, or a unit wallet, in which each user keeps their system units. Each user of the system may purchase system units through any suitable method. For example, the user may purchase units through an on-line application using a credit card or other payment platform. The user may also purchase a card from an off-line retailer, the card having a search code associated with a predetermined amount of system units. The user may then input the search code into a system query. After a user verification process, the predetermined amount of system units will be deposited into the user's associated account. These system units may be used during transactions to make purchases of goods or services, or to otherwise transfer amounts of system units between a user and a vendor or between users. A vendor of the system may also be a user of the system. Therefore, while the example transaction illustrated with reference to FIG. 6 involves a user and a vendor, embodiments of the present invention can be used with transactions other than purchase transactions. For example, any transfers for any purpose may be made using embodiments of the system, as desired by the particular application.

In the embodiment of the present invention where the action taken in response to a search code query is a transaction, the campaign associated with that search code may be considered a sales of a good or service, multiple goods or services, or a combination of goods and services, a transfer or exchange of currency, virtual currency, or other units of value, or any other desired transaction.

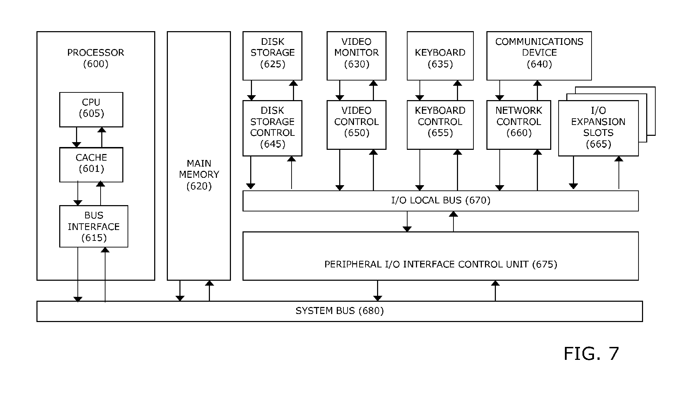

FIG. 7 is a block diagram of example computer architecture for use with embodiments of the present invention, in accordance with an embodiment of the present invention. The illustrated example computer architecture may be part of a computer suitable for performing the functions of the search code information retrieval system and associated applications. The illustrated computer architecture may also be suitable for running other system and network applications. A microprocessor 601, including of a central processing unit (CPU) 605, a memory cache 610, and a bus interface 615, is connected via a system bus 680 to a main memory 620 and an input/output (I/O) control unit 675. The I/O interface control unit 675 is connected via an I/O local bus 670 to a disk storage controller 645, video controller 650, a keyboard controller 655, a network controller 660, and I/O expansion slots 665. The disk storage controller 645 is connected to the disk storage device 625. The video controller is connected to the video monitor 630. The keyboard controller 655 is connected to the keyboard 635. The network controller 660 is connected to the communications device 640. The communications device 640 is adapted to allow the system to communicate with a communications network, such as the Internet, a local area network (LAN), a wide area network (WAN), a virtual private network (VPN), or a middleware bus, or with other software objects over the communications network.

Computer program instructions for implementing the system may be stored on the disk storage device 625 until the processor 600 retrieves the computer program instructions, either in full or in part, and stores them in the main memory 620. The processor 600 then executes the computer program instructions stored in the main memory 620 to implement the features of the system. The program instructions may also be executed with a multiprocessor computer having more than one processor. The various data objects generated by the system, including the database, search codes, campaigns, applications, information, and other data objects used with the system may be stored on either the disk storage device 625 or the memory 620 or any other storage device that is in operable communication with the system. According to one embodiment, the disk storage device 625 may be the system memory 112 shown in FIG. 1.

The example computer architecture illustrated in FIG. 6 is one example of architecture used to operate the system. A processor component is a device or collection of devices that is capable of operating the embodiments of the present invention. In one embodiment, the processing component may include the example computer architecture or a part of the example computer architecture, such as the microprocessor, that is needed to process data and the computer operable instructions of the information retrieval system. In one embodiment, similar example computer architecture may be used for operation of the user device. The components of the system illustrated in FIG. 1 may operate on one or more computer systems. The system, and any other associated programs, applications, components, and operations, may also run on the one or more computer systems, each having a processor component. According to one embodiment, the computer system is a specifically configured to perform the operations of the present invention as described with reference to the described embodiments. According to another embodiment, the computer system may be a conventional computer, such as a personal computer or a dedicated server.

While embodiments of the search code are illustrated and described having a visible part and a non-visible part, it will be appreciated that applications of embodiments of the present invention may selectively use only the visible part of the search code, or only the non-visible part of the search code, or both the visible part and the non-visible part of the search code. Embodiments of the present invention may therefore use a part of or the whole of the search code input by a user of the system and received by the system server.

While the embodiments of the present invention may be implemented as computer software or computer executable instructions, the functions and operations required for implementing embodiments of the invention may also be embodied in part or in whole using hardware components, such as application specific integrated circuits or other suitable hardware, or some combination of hardware components and computer executable instructions.

While the invention has been particularly shown and described with reference to the illustrated embodiments, those skilled in the art will understand that changes in form and detail may be made without departing from the spirit and scope of the invention. For example, while the process flows are described and illustrated in a particular order, it will be appreciated that the steps and operations may be performed in other orders, as well as substantially simultaneously, for example, in the case of a large implementation where multiple users are accessing the system at generally the same time. Also, while certain example implementations have been described, these are provided for the purpose of illustration and other different implementations may be used with embodiments of the present invention.

Accordingly, the above description is intended to provide example embodiments of the present invention, and the scope of the present invention is not to be limited by the specific examples provided.

## Claims

1. An information retrieval system using a search code, the information retrieval system comprising:
a processor component configured to perform the operations of a system application, the system application configured to generate one or more data records, the system application further configured to generate multiple search codes and store the multiple search codes and the one or more data records in memory and associate each of the one or more data records with one or more of the multiple search codes, each of the one or more data records including instructions for the execution of a predetermined action.

2. The information retrieval system of claim 1, wherein each of the multiple search codes is a visible part of the search code, and wherein the processor component is further configured to receive data, wherein the data represents a non-visible part of each of the multiple search codes.

3. The information retrieval system of claim 2, wherein the non-visible data includes location information.

4. The information retrieval system of claim 2, wherein the non-visible data includes GPS positioning information.

5. The information retrieval system of claim 1, wherein the user notification is offline media including one of the one or more multiple search codes.

6. The information retrieval system of claim 1, wherein the user notification is online media including one of the multiple search codes.

7. The information retrieval system of claim 1, further comprising a device in operable communication with the system application, the device is configured to transmit a search code query including a predetermined one of the multiple search codes to the system application, and wherein the system application is further configured to receive the search code query and query the database using the predetermined one of the multiple search codes to locate a data record associated with the predetermined one of the multiple search codes, the system application further configured to execute the instructions for the execution of the predetermined action.

8. The information retrieval system of claim 7, wherein the system application is further configured to generate and update user profiles and store the user profiles on the database, wherein a corresponding user profile is updated in response to the search code query.

9. The information retrieval system of claim 7, wherein the device is in operable communication with the system application over the Internet, and the search code query is transmitted to the system application using a web browser.

10. The information retrieval system of claim 7, wherein the predetermined action is a transmission of a sales offer.

11. The information retrieval system of claim 7, wherein the predetermined action is a launching of an application.

12. The information retrieval system of claim 7, wherein the predetermined action is a transmission of launching sales offer.

13. The information retrieval system of claim 7, wherein the predetermined action is a transaction.

14. The information retrieval system of claim 13, wherein the transaction is a purchase, and wherein the transaction includes step of transferring currency units from a first user to a second user.

15. The information retrieval system of claim 8, wherein the predetermined action is a transaction, and wherein each of the user profiles includes a currency unit account configured to store and track the deposit and withdrawal of currency units from the currency unit account, and the transaction includes the step of withdrawing a predetermined amount of currency units from a first user profile and deposing the predetermined amount of currency units to a second user profile.

16. The information retrieval system of claim 1, wherein the data record includes qualification information and instruction information.

17. An information retrieval method comprising of:
generating one or more data records;
storing multiple search codes and the one or more data records in memory; and
associating each of the one or more data records with one or more of the multiple search codes, each of the one or more data records including instructions for the execution of a predetermined action.

18. The method of claim 17, further comprising:
receiving a search code query, wherein the search code query includes one of the multiple search codes and data representing a non-visible part of the one of the multiple search codes;
querying the memory using the search code query to retrieve the data record associated with the one of multiple search codes; and
initiating an action according to instructions included in the data record.

19. The method of claim 18, further comprising updating a user profile and storing the user profile on the database, wherein the user profile is updated in response to the search code query.

20. A computer-readable memory medium having computer-executable instructions for controlling a computer processor to retrieve information, comprising:
instructions for generating one or more data records;
instructions for storing multiple search codes and the one or more data records in memory; and
instructions for associating each of the one or more data records with one or more of the multiple search codes, each of the one or more data records including instructions for the execution of a predetermined action.

21. The computer-readable memory medium of claim 20, further comprising:
instructions for receiving a search code query, wherein the search code query includes one of the multiple search codes and data representing a non-visible part of the one of the multiple search codes;
instructions for querying the memory using the search code query to retrieve the data record associated with the one of the multiple search codes; and
instructions for initiating an action according to instructions included in the data record.

22. The computer-readable memory medium of claim 21, further comprising instructions for updating a user profiles and storing the user profile on the database, wherein the user profile is updated in response to the search code query.
